# EUROPEAN PATENT APPLICATION

(11) **EP 4 841 722 A1**
(43) Date of publication of application: **18.11.2026**
(21) Application number: 24937912.4
(22) Date of filing: 17.12.2024
(51) Int. Cl.: H01M 8/1004, H01M 4/88, H01M 4/92, H01M 4/86, H01M 8/10

(54) **MEMBRANE-ELECTRODE ASSEMBLY FOR FUEL CELL, MANUFACTURING METHOD THEREFOR, AND FUEL CELL COMPRISING MEMBRANE-ELECTRODE ASSEMBLY**

(30) Priority: 29.04.2024 KR 20240056924; 13.12.2024 KR 20240186427
(71) Applicant: Kolon Industries, Inc., Seoul 07793 (KR)
(72) Inventor: KIM, Jung Ho, Seoul 07793 (KR); KIM, Jun Young, Seoul 07793 (KR); SONG, Ka Young, Seoul 07793 (KR); KONG, Nak Won, Seoul 07793 (KR); LEE, Eun Su, Seoul 07793 (KR); KIM, Hyeong Su, Seoul 07793 (KR); LEE, Ju Sung, Seoul 07793 (KR); NAM, Kyoung Sik, Seoul 07793 (KR); PARK, Chan Mi, Seoul 07793 (KR)
(74) Representative: Vossius & Partner Patentanwälte Rechtsanwälte mbB
(86) International application number: PCT/KR2024/097043
(87) International publication number: WO 2025/230090

(57) **Abstract**

The present invention relates to a membrane-electrode assembly for a fuel cell, a manufacturing method therefor, and a fuel cell comprising the membrane-electrode assembly, the membrane-electrode assembly comprising: a polymer electrolyte membrane; a first layer formed on a predetermined region of any one surface of the polymer electrolyte membrane; and a second layer for covering the outer surface of the first layer and the region of one surface of the polymer electrolyte membrane on which the first layer is not formed, wherein the first layer includes platelet carbon nanofibers, and the second layer includes a catalyst carrier, a catalyst supported on the catalyst carrier and an ionomer. According to the present invention, performance and durability can be improved by comprising the first layer.

## Description

### Technical Field

The present disclosure relates to a membrane-electrode assembly for a fuel cell, a method for manufacturing the same, and a fuel cell including the membrane-electrode assembly.

### Background Art

A fuel cell is a power generation system that directly converts chemical energy generated by a chemical reaction between hydrogen contained in hydrocarbon-based materials, such as methanol, ethanol, and natural gas, and oxygen, into electrical energy. Representative examples of such a fuel cell include polymer electrolyte membrane fuel cells (PEMFCs). The polymer electrolyte membrane fuel cells are gaining attention as portable, automotive, and home power supply devices due to their advantages, such as a low operating temperature of less than 100°C, fast start-up and response characteristics, and excellent durability.

In the fuel cell system, a membrane-electrode assembly (MEA) that substantially generates electricity has a structure in which an anode electrode (also referred to as a fuel electrode or an oxidation electrode) and a cathode electrode (also referred to as an air electrode or a reduction electrode) are positioned with an electrolyte membrane interposed therebetween.

To summarize the reactions occurring in the polymer electrolyte fuel cell, when a fuel such as hydrogen gas is supplied to the anode electrode, hydrogen ions (H⁺) and electrons (e⁻) are generated at the anode electrode by hydrogen oxidation reaction. The generated hydrogen ions (H⁺) are transferred to the cathode electrode through the polymer electrolyte membrane, and the generated electrons (e⁻) are transferred to the cathode electrode through the external circuit. At the cathode electrode, oxygen is supplied and combines with hydrogen ions (H⁺) and electrons (e⁻), and water is produced by oxygen reduction reaction.

One of important variables determining the efficiency of such a fuel cell is how efficiently the reduction reaction of hydrogen ions occurs. That is, it depends on how efficiently the oxygen reduction reaction at the cathode occurs after the hydrogen ions generated by the oxidation reaction at the anode move through the electrolyte. For the efficient oxygen reduction reaction, not only the movement of hydrogen ions within the polymer electrolyte membrane but also the movement of hydrogen ions from the anode and cathode sides that are in contact with the polymer electrolyte membrane need to be smooth. In addition, there are problems that make the commercialization of fuel cells difficult, such as the decrease in durability caused by electrode degradation during operation. Thus, to improve the lifespan of fuel cells, continued research needs to be conducted on electrodes with excellent durability.

### DISCLOSURE

### Technical Problem

An object of the present disclosure is to provide a membrane-electrode assembly for a fuel cell that can improve the performance and durability of the fuel cell.

Another object of the present disclosure is to provide a method for manufacturing the membrane-electrode assembly for a fuel cell.

Another object of the present disclosure is to provide a fuel cell including the membrane-electrode assembly.

### Technical Solution

To achieve the above objects, the present disclosure provides a membrane-electrode assembly for a fuel cell, comprising: a polymer electrolyte membrane; a first layer formed on a predetermined area of any one surface of the polymer electrolyte membrane; and a second layer formed to cover the outer surface of the first layer and an area of the one surface of the polymer electrolyte membrane on which the first layer is not formed, wherein the first layer comprises platelet carbon nanofibers, and the second layer comprises a catalyst carrier, a catalyst supported on the catalyst carrier, and an ionomer.

A side of the platelet carbon nanofibers in the long axis direction of the nanofibers may be in contact with one surface of the polymer electrolyte membrane.

The platelet carbon nanofibers may be randomly arranged on the surface of the polymer electrolyte membrane.

The platelet carbon nanofibers may have a width of 5 to 100 nm and a length of 100 to 10,000 nm.

The polymer electrolyte membrane may comprise an uneven structure formed on the predetermined area of the one surface of the polymer electrolyte membrane by forming the first layer.

A portion of the second layer may cover the outer surface of the uneven structure formed on the polymer electrolyte membrane.

The area of the one surface of the polymer electrolyte membrane which is covered with the second layer and on which the first layer is not formed may comprise the catalyst carrier of the second layer, the catalyst supported on the catalyst carrier, and the ionomer.

The platelet carbon nanofibers may be electrically conductive carbon nanofibers having no catalyst supported thereon.

The first layer may further comprise a first ionomer, wherein the first ionomer may be contained in a form applied to the platelet carbon nanofibers by mixing or applied to the platelet carbon nanofibers by coating.

The first ionomer or the ionomer may be at least one selected from the group consisting of proton conductors having at least one proton exchange group selected from the group consisting of a sulfonic acid group, a carboxyl group, a boronic acid group, a phosphate group, an imide group, a sulfonimide group, a sulfonamide group, a sulfonic acid fluoride group, and combinations thereof.

The first layer may have a thickness of 30 to 2,000 nm, and the thickness of the second layer may be the same as or larger than that of the first layer.

The catalyst carrier in the second layer may be a spherical or plate-shaped carbon-based carrier.

The catalyst carrier may be at least one selected from the group consisting of graphite, graphene, fullerenes, super P, carbon black, ketjen black, denka black, acetylene black, carbon spheres, activated carbon, carbon nanoballs, carbon nanohorns, carbon nanocages, and carbon nanorings.

The first layer may occupy an area of 5 to 65% of the total surface of the polymer electrolyte membrane.

The present disclosure also provides a method for manufacturing a membrane-electrode assembly for a fuel cell, comprising: a step of forming a first layer comprising platelet carbon nanofibers on a predetermined area of one surface of a polymer electrolyte membrane; and a step of forming a second layer to cover the outer surface of the first layer and an area of the one surface of the polymer electrolyte membrane on which the first layer is not formed, by applying a slurry containing a catalyst carrier, a catalyst supported on the catalyst carrier, and an ionomer onto the polymer electrolyte membrane having the first layer formed thereon.

The forming of the first layer may be performed by applying a composition containing the platelet carbon nanofibers and the first ionomer onto the polymer electrolyte membrane.

The composition may contain the platelet carbon nanofibers and the first ionomer at a weight ratio of 1.0:0.1 to 1.0:0.5.

The forming of the first layer may be performed by applying the platelet carbon nanofibers coated with the first ionomer onto the polymer electrolyte membrane.

The first ionomer may be coated at a weight ratio of 1.0:0.1 to 1.0:0.5 or to a thickness of 2 to 10 nm with respect to the platelet carbon nanofibers.

The present disclosure also provides a fuel cell comprising the membrane-electrode assembly.

### Advantageous Effects

A membrane-electrode assembly for a fuel cell according to the present disclosure has the effect of improving the durability of a fuel cell without degrading performance by including a catalyst layer with better durability disposed on an outer peripheral surface of an electrode and a catalyst layer with better electrochemical performance, such as electrical conductivity, disposed inside the electrode.

The membrane-electrode assembly for a fuel cell according to the present disclosure has improved electrochemical performance and durability, and thus has the effect of reducing the cost of using a fuel cell including the same.

### Brief Description of Drawings

Fig. 1 is a schematic cross-sectional view of a membrane-electrode assembly according to one embodiment of the present disclosure.
Fig. 2 is a schematic cross-sectional view of an example of an electrode for a fuel cell according to one embodiment of the present disclosure.
Fig. 3 is an SEM image of a first layer formed on a polymer electrolyte membrane prepared according to one embodiment of the present disclosure, and an enlarged image of the first layer in Fig. 3 is a TEM image.
Fig. 4 schematically illustrates a method for manufacturing a membrane-electrode assembly according to one embodiment of the present disclosure.
Fig. 5 is a schematic diagram illustrating the overall configuration of a fuel cell according to one embodiment of the present disclosure.
Fig. 6 is a schematic diagram illustrating the structure of platelet carbon nanofibers.

### Mode for Invention

Hereinafter, embodiments of the present disclosure will be described in detail with reference to the accompanying drawings so that those skilled in the art can easily carry out the present disclosure. However, the present disclosure may be embodied in various different forms and is not limited to the embodiments described herein.

In the drawings, thicknesses are exaggerated to clearly show various layers and regions, and the same reference numerals are used for similar parts throughout the specification. When a part such as a layer, film, region, or plate is referred to as being "above" or "on" another part, it refers not only to a case where the part is directly above the other part, but also to a case where a third part exists therebetween. Conversely, when any part is referred to as being "directly on" another part, it means that there is no third part therebetween.

The terms "include" and "contain" as used in the present specification are used to list materials, compositions, devices, and methods useful in the present disclosure, but are not limited to the listed examples.

Hereinafter, an electrode for a fuel cell according to one embodiment will be described with reference to the drawings.

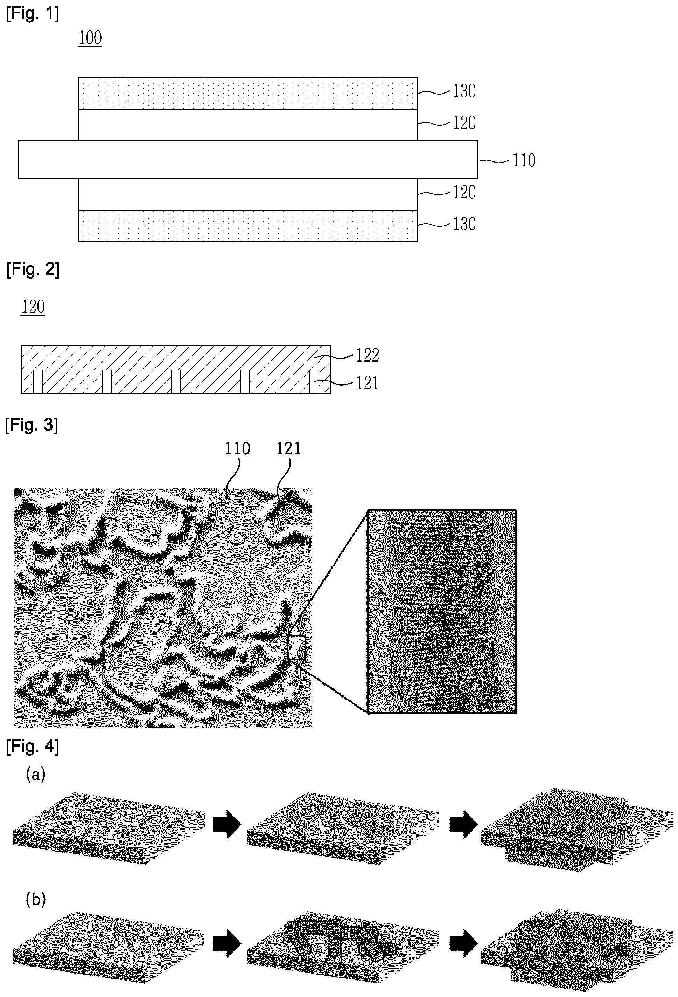

Fig. 1 is a schematic cross-sectional view of a membrane-electrode assembly 100 according to one embodiment of the present disclosure, and Fig. 2 is a schematic cross-sectional view of an example of an electrode 120 for a fuel cell according to one embodiment of the present disclosure. Here, the electrode 120 may be an anode electrode, a cathode electrode, or both.

Referring to Figs. 1 and 2, the membrane-electrode assembly 100 according to one embodiment of the present disclosure includes: a polymer electrolyte membrane 110; a first layer 121 formed on a predetermined area of one surface of the polymer electrolyte membrane 110; and a second layer 122 formed to cover the outer surface of the first layer 121 and an area of the one surface of the polymer electrolyte membrane on which the first layer 121 is not formed, wherein the first layer 121 includes platelet carbon nanofibers, and the second layer includes a catalyst carrier, a catalyst supported on the catalyst carrier, and an ionomer.

In one embodiment, a side of the platelet carbon nanofibers in the long axis direction of the nanofibers may be in contact with the one surface of the polymer electrolyte membrane.

The long axis direction may refer to the direction of the platelet carbon nanofibers, which has the longest length. Specifically, the long axis direction may be the length direction of the platelet carbon nanofibers.

The side of the nanofibers may be defined as including the side and edge of the long axis of the platelet carbon nanofibers.

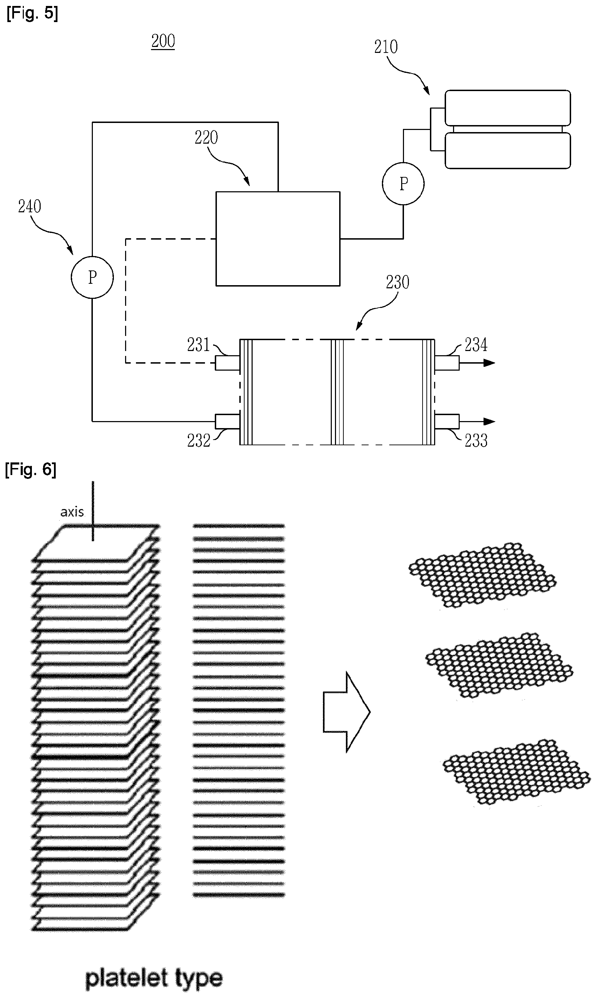

Referring to Fig. 6, the platelet carbon nanofibers may be defined as having a structure in which a plurality of carbon hexagonal net planes are arranged perpendicularly to the long axis direction of the nanofibers.

According to one embodiment of the present disclosure, the side of the nanofibers is in contact with one surface of the polymer electrolyte membrane 110 in the long axis direction of the platelet carbon nanofibers, so that the side of the plurality of carbon hexagonal net planes in the platelet carbon nanofibers is arranged approximately perpendicular to the surface of the polymer electrolyte membrane 110 (see Fig. 3). Spaces are created between the plurality of carbon hexagonal net planes arranged approximately perpendicularly as described above, and these spaces may serve as electron paths. Accordingly, the membrane-electrode assembly 100 of the present disclosure may prevent performance degradation by having shorter electron paths formed therein and improve durability by having an enhanced function of dissipating heat using the electron paths.

According to one embodiment of the present disclosure, the platelet carbon nanofibers do not necessarily have to be arranged in one direction on the polymer electrolyte membrane 110 and may be arranged randomly. In addition, the platelet carbon nanofibers may be superimposed on each other and deposited on the polymer electrolyte membrane 110. Accordingly, some of the carbon hexagonal net planes may not necessarily be perpendicular to the surface of the polymer electrolyte membrane 110 and may be inclined.

According to one embodiment of the present disclosure, the first layer, for example, platelet carbon nanofibers, may cover an area of 5 to 65%, 7 to 64%, 9 to 63%, 11 to 62%, 13 to 61%, 17 to 60%, 20 to 59%, 24 to 58%, 27 to 57%, 30 to 56%, 34 to 55%, 37 to 54%, 40 to 53%, 43 to 52%, 45 to 51%, or 50% of the total surface of the polymer electrolyte membrane 110, without being limited thereto. If the above platelet carbon nanofibers cover an area of the polymer electrolyte membrane, which is outside the above-described range, the effect resulting from adding the platelet carbon nanofibers may not be achieved, and the catalytic active area may be insufficient or water discharge or the like may not be smooth.

According to one embodiment of the present disclosure, the platelet carbon nanofibers may have a width of 5 to 100 nm, 8 to 95 nm, 12 to 90 nm, 16 to 85 nm, 20 to 80 nm, 24 to 75 nm, 28 to 70 nm, 32 to 65 nm, 36 to 60 nm, 40 to 55 nm, 44 to 53 nm, or 50 nm, without being limited thereto. The platelet carbon nanofibers may have a length of 100 to 10,000 nm, 120 to 8,000 nm, 140 to 6,000 nm, 160 to 4,000 nm, 180 to 2,000 nm, 200 to 1,000 nm, 220 to 900 nm, 240 to 800 nm, 260 to 700 nm, 280 to 600 nm, 300 to 500 nm, 350 to 450 nm or 400 nm, without being limited thereto. In addition, in the platelet carbon nanofibers, the ratio of the fiber length to the fiber width may be 20 or more, and the inter-plane distance between the carbon hexagonal net planes may be less than 3.9 Å. By controlling the width, length, and fiber length-to-width ratio of the platelet carbon nanofiber within the above-described ranges, the movement of fuel and air or water discharge may be achieved smoothly while maintaining the excellent electrical conductivity of the carbon nanofiber.

Carbon-based materials such as carbon nanotubes may be electrically conductive and may also be used as catalyst carriers that support a catalyst. However, according to one embodiment of the present disclosure, the platelet carbon nanofibers may be electrically conductive carbon nanofibers, but may not essentially have a catalyst supported thereon. However, as described below, the platelet carbon nanofibers may be mixed with a first ionomer for hydrogen ion transfer or be coated with the first ionomer.

According to one embodiment of the present disclosure, the first layer 121 may further include a first ionomer. The first ionomer may be the same as or different from an ionomer of the second layer, and any ionomer may be used without limitation as long as it may be used as an ionomer in the field of fuel cell technology. The first ionomer or the ionomer is for hydrogen ion transfer and may also function as a binder.

Specifically, the first ionomer or the ionomer may be at least one selected from the group consisting of proton conductors having at least one proton exchange group selected from the group consisting of a sulfonic acid group, a carboxyl group, a boronic acid group, a phosphate group, an imide group, a sulfonimide group, a sulfonamide group, a sulfonic acid fluoride group, and combinations thereof.

When both the first and second layers include the ionomer, low-humidity performance and durability may be excellent.

The first ionomer or the ionomer may be a fluorinated proton conductor, a hydrocarbon-based proton conductor, or a mixture thereof. Specifically, the first ionomer or the ionomer may be a fluorinated proton conductor having a sulfonic acid group and/or a carboxyl group, a hydrocarbon-based proton conductor having a sulfonic acid group and/or a carboxyl group, or a mixture thereof.

Examples of the fluorinated proton conductors include Nafion, Asiplex, Flemion, polyvinylidene fluoride, hexafluoropropylene, trifluoroethylene, polytetrafluoroethylene, or copolymers thereof.

Examples of the hydrocarbon-based proton conductor include hydrocarbon-based polymers having the proton exchange group in their side chains, such as sulfonated polyimide (S-PI), sulfonated polyarylethersulfone (S-PAES), sulfonated polyetheretherketone (S-PEEK), sulfonated polybenzimidazole (S-PBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, and sulfonated polyarylene ether sulfone ketone.

According to one embodiment of the present disclosure, the first ionomer or the ionomer may have an equivalent weight (EW) of 600 to 1,200. By controlling the equivalent weight within the above range, appropriate hydrogen ion conductivity may be ensured.

According to one embodiment of the present disclosure, the first ionomer may be included in a form applied to the platelet carbon nanofibers by mixing or applied to the platelet carbon nanofibers by coating.

In one embodiment, the first layer 121 may be composed of platelet carbon nanofibers alone, ionomer-coated platelet carbon nanofibers alone, or a mixture of platelet carbon nanofibers and an ionomer.

According to one embodiment of the present disclosure, the polymer electrolyte membrane may include an uneven structure formed on a predetermined area of one surface of the polymer electrolyte membrane by forming the first layer.

The first layer may have an uneven structure on the surface of the polymer electrolyte membrane 110 due to the platelet carbon nanofibers (see Figs. 2 and 3).

According to one embodiment of the present disclosure, a portion of the second layer 122 may cover the outer surface of the uneven structure formed on the polymer electrolyte membrane. In addition, a portion of the second layer 122 may cover the remaining area of the polymer electrolyte membrane, on which no uneven structure is formed. That is, it may fill the space between the convex portions of the uneven structure formed on the polymer electrolyte membrane, the concave portions, and/or the space within the uneven structure.

In one embodiment, a portion of the second layer 122 may cover an area of one surface of the polymer electrolyte membrane on which the first layer 121 is not formed, and at the same time, at least some of the components of the second layer 122, such as a catalyst, a catalyst carrier, or an ionomer, may be included in the first layer 121.

According to one embodiment of the present disclosure, the first layer 121 may include platelet carbon nanofibers not essentially having a catalyst supported thereon, platelet carbon nanofibers coated with a first ionomer and not essentially having a catalyst supported thereon, or a catalyst carrier having a catalyst supported thereon.

According to one embodiment of the present disclosure, the first layer 121 may have a thickness of 30 to 2,000 nm, 60 to 1,900 nm, 100 to 1,800 nm, 130 to 1,700 nm, 170 to 1,600 nm, 200 to 1,500 nm, 250 to 1,500 nm, 300 to 1,400 nm, 370 to 1,400 nm, 450 to 1,200 nm, 530 to 1,100 nm, or 600 to 1,000 nm, without being limited thereto. If the thickness of the first layer is outside the above-described range, the effect resulting from adding the platelet carbon nanofibers may be difficult to exhibit effectively, and the migration distance of ions and electrons may increase, resulting in an increase in resistance.

The second layer 122 includes a catalyst carrier, a catalyst supported on the catalyst carrier, and an ionomer. The catalyst carrier, the catalyst, and the ionomer may be those commonly used in the field of fuel cell technology and are not particularly limited.

The catalyst may be any metallic catalyst that may participate in the fuel cell reaction and be used as a catalyst. Specifically, the catalyst may be a platinum-based catalyst. The platinum-based catalyst may include particles of any one metal selected from the group consisting of platinum, ruthenium, osmium, a platinum-M alloy (where M is any one transition metal selected from the group consisting of Pd, Ir, Os, Ga, Ti, V, Cr, Mn, Fe, Co, Ni, Cu, Zn, Sn, Mo, W, Rh, Ru, and alloys thereof), and mixtures thereof. For example, the platinum-based catalyst may be Pt, Pt-Pd, Pt-Mn, Pt-Sn, Pt-Mo, Pt-Cr, Pt-W, Pt-Ru, Pt-Ni, Pt-Co, Pt-Y, Pt-Ru-W, Pt-Ru-Ir, Pt-Ru-Ni, Pt-Ru-Mo, Pt-Ru-Rh-Ni, Pt-Ru-Sn-W, Pt-Ru-Ir-Ni, Pt-Ru-Ir-Y, Pt-Co-Mn, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, or Pt-Cr-Ir.

According to one embodiment of the present disclosure, the catalyst may have a particle diameter in the range of 2 to 20 nm. As the particle diameter increases, durability increases but performance decreases. Thus, by controlling the particle diameter within the above range, the durability and performance of the catalyst may be maintained within appropriate ranges.

As the catalyst carrier, any carrier may be used as long as it may be used as a carrier in the field of fuel cell technology. However, any carrier other than platelet carbon nanofibers may preferably be used as the catalyst carrier. Specifically, the catalyst carrier may be selected from among, for example, spherical or plate-shaped carbon-based carriers, porous inorganic oxide carriers such as zirconia, alumina, titania, silica, and ceria, and zeolite carriers. Preferably, a spherical or plate-shaped carbon-based carrier may be used as the catalyst carrier. The spherical or plate-shaped carbon-based carrier may be at least one selected from the group consisting of graphite, graphene, fullerene, super P, carbon black, ketjen black, denka black, acetylene black, carbon spheres, activated carbon, carbon nanoballs, carbon nanohorns, carbon nanocages, and carbon nanorings.

According to one embodiment of the present disclosure, the catalyst carrier may have a diameter of 15 to 100 nm and a pore size of 0.1 to 15 nm or 1 to 10 nm.

The ionomer may be the same as or different from the first ionomer that may be included in the first layer 121.

According to one embodiment of the present disclosure, the second layer 122 may have a thickness of, for example, 3 to 20 µm, and the thickness of the second layer 122 may be the same as or larger than the thickness of the first layer 121. If the thickness of the second layer 122 is smaller than that of the first layer 121, the catalytic activity, etc. thereof may not be sufficient.

According to one embodiment of the present disclosure, the second layer 122 may consist of a plurality of layers formed on the first layer 121. That is, at least one second layer 122 may be formed.

The polymer electrolyte membrane 110 is a solid polymer electrolyte with a thickness of 5 to 200 µm and has an ion exchange function that moves hydrogen ions generated at the anode electrode 120 to the cathode electrode 120.

The polymer electrolyte membrane 110 may be a hydrocarbon-based polymer electrolyte membrane, a fluorinated polymer electrolyte membrane, or a mixture or copolymer of one or more thereof.

The hydrocarbon-based polymer electrolyte membrane may include a hydrocarbon-based polymer, wherein the polymer may be selected from homopolymers or copolymers of styrene, imide, sulfone, phosphazene, ether-ether ketone, ethylene oxide, polyphenylene sulfide, or aromatic groups, and derivatives thereof, and these polymers may be used alone or in combination. An electrolyte membrane produced using a hydrocarbon-based polymer has a low production cost, is easy to produce, and exhibits high ionic conductivity compared to one produced using a fluorinated polymer.

More preferably, the suitable hydrocarbon-based membrane may be at least one selected from the group consisting of a sulfonated polysulfone membrane, a sulfonated polyethersulfone membrane, a sulfonated polyetherketone membrane, a sulfonated poly(ether ether ketone) membrane, a sulfonated poly(arylene ether ether ketone) membrane, a sulfonated poly(arylene ether sulfone) membrane, a sulfonated poly(arylene ether benzimidazole) membrane, and a membrane into which an ion conductor has been introduced.

The fluorinated polymer electrolyte membrane may be used without particular limitation as long as it is a material having sufficient mechanical strength to form a film as an ion-conducting membrane as well as high electrochemical stability. Specific examples of fluorinated polymer electrolyte membranes include perfluorosulfonic acid resin, a copolymer of tetrafluoroethylene and fluorovinyl ether, and the like. The fluorovinyl ether moiety has a function of conducting hydrogen ions. The copolymer is commercially available from Dupont under the trade name Nafion.

According to one embodiment of the present disclosure, the membrane-electrode assembly 100 may further include a gas diffusion layer 130 bonded thereto (see Fig. 1).

The gas diffusion layer 130 is disposed between the membrane-electrode assembly 100 and a separator plate of a fuel cell, and any gas diffusion layer used in the art may be used without limitation. For example, the gas diffusion layer 130 may include a conductive substrate selected from the group consisting of carbon paper, carbon cloth, and carbon felt. The gas diffusion layer may further include a microporous layer formed on one surface of the conductive substrate, wherein the microporous layer may include a carbon-based material, such as carbon black or carbon nanotubes, or a fluorinated resin such as polytetrafluoroethylene or polyvinylidene fluoride (PVdF).

A membrane-electrode assembly for a fuel cell according to one embodiment of the present disclosure may be manufactured as described below.

According to one embodiment, there may be provided a method for manufacturing a membrane-electrode assembly for a fuel cell, including: a step of forming a first layer including platelet carbon nanofibers on a predetermined area of one surface of a polymer electrolyte membrane; and a step of forming a second layer to cover the outer surface of the first layer and an area of the one surface of the polymer electrolyte membrane on which the first layer is not formed, by applying a slurry including a catalyst carrier, a catalyst supported on the catalyst carrier, and an ionomer onto the polymer electrolyte membrane having the first layer formed thereon.

Fig. 4 schematically shows a method for manufacturing a membrane-electrode assembly according to one embodiment of the present disclosure, wherein (a) of Fig. 4 is a schematic diagram showing a process of forming a first layer including platelet carbon nanofibers on a polymer electrolyte membrane, and (b) of Fig. 4 is a schematic diagram showing a process of forming a first layer containing ionomer-coated platelet carbon nanofibers on a polymer electrolyte membrane.

According to one embodiment, there may be provided a method for manufacturing a membrane-electrode assembly for a fuel cell, including a step of forming a second layer by applying a slurry including a catalyst carrier, a catalyst supported on the catalyst carrier, and an ionomer onto a transfer substrate; a step of forming a first layer including platelet carbon nanofibers on the second layer; and a step of bonding the first layer onto at least one surface of a polymer electrolyte membrane.

According to one embodiment of the present disclosure, the step of forming the first layer may be performed by depositing the platelet carbon nanofibers on the surface of the polymer electrolyte membrane or the second layer. As shown in (a) of Fig. 4, the platelet carbon nanofibers may be deposited alone, or may be deposited together with a suitable solvent as needed. The solvent may be any one selected from the group consisting of water, methanol, ethanol, butanol, n-propanol, isopropanol, n-butyl acetate, ethylene glycol, dipropylene glycol, glycerol, and combinations thereof, and any type of solvent may be used without limitation as long as it may disperse the carbon nanofibers well.

According to one embodiment of the present disclosure, the step of forming the first layer may be performed by applying a composition containing the platelet carbon nanofibers and the first ionomer onto the surface of the polymer electrolyte membrane or the second layer. In the composition, the platelet carbon nanofibers and the first ionomer may be contained at a weight ratio of 1:0.1 to 1:0.5.

According to one embodiment of the present disclosure, the method for manufacturing a membrane-electrode assembly according to the present disclosure may further include a step of coating the platelet carbon nanofibers with a first ionomer, and as shown in (b) of Fig. 4, the step of forming the first layer may be performed by applying the platelet carbon nanofibers coated with the first ionomer onto the polymer electrolyte membrane. Coating with the first ionomer may be performed, for example, by heat treatment, specifically by heat treatment at 100 to 160°C. The first ionomer may be coated at a weight ratio of 1:0.1 to 1:0.5 or to a thickness of 2 to 10 nm with respect to the platelet carbon nanofibers. When coating with the ionomer is performed at the above weight ratio or to the above thickness, the platelet carbon nanofibers may be easily coated and aggregation of the carbon nanofibers may be reduced. The platelet carbon nanofibers coated with the first ionomer may be applied together with a suitable solvent as needed.

The first layer and the second layer may be formed by any method known in the art, such as spray coating, inkjet printing, roll-to-roll printing, screen printing, or the like. Specific manufacturing conditions, such as spray pressure, drying temperature, drying time, etc., may be appropriately selected and performed by a person skilled in the art.

A fuel cell according to one embodiment of the present disclosure may be a fuel cell which includes the membrane-electrode assembly and uses, for example, hydrogen gas as fuel.

Fig. 5 is a schematic diagram illustrating the overall configuration of a fuel cell according to one embodiment of the present disclosure.

Referring to Fig. 5, a fuel cell 200 may include: a fuel supply unit 210 configured to supply a mixed fuel composed of fuel and water; a reforming unit 220 configured to reform the mixed fuel to generate a reformed gas containing hydrogen gas; a stack 230 configured to generate electrical energy by causing an electrochemical reaction between the reformed gas containing hydrogen gas supplied from the reforming unit 220 and an oxidant; and an oxidant supply unit 240 configured to supply an oxidant to the reforming unit 220 and the stack 230.

The stack 230 may include a plurality of unit cells that generate electrical energy by inducing an oxidation/reduction reaction between the reformed gas containing hydrogen gas supplied from the reforming unit 220 and the oxidant supplied from the oxidant supply unit 240.

Each unit cell means a unit cell that generates electricity, and may include a membrane-electrode assembly that oxidizes/reduces the reformed gas containing hydrogen gas and the oxygen of the oxidant, and separator plates (also called bipolar plates, hereinafter referred to as "separator plates") for supplying the reformed gas containing hydrogen gas and the oxidant to the membrane-electrode assembly. The separator plates are disposed on both sides of the membrane-electrode assembly. At this time, the separator plates located at the outermost sides of the stack, respectively, are also specifically referred to as end plates.

Among the separator plates, the end plate includes a pipe-shaped first supply tube 231 for injecting the reformed gas containing hydrogen gas supplied from the reforming unit 220, and a pipe-shaped second supply tube 232 for injecting oxygen gas, and the other end plate includes a first discharge tube 233 for discharging the remaining unreacted reformed gas containing hydrogen gas from the plurality of unit cells to the outside, and a second discharge tube 234 for discharging the remaining unreacted oxidant from the unit cells to the outside.

Hereinafter, specific examples of the present disclosure will be presented. However, the examples described below are merely for the purpose of illustrating or explaining the present disclosure in detail and the present disclosure is not limited thereto. Furthermore, contents not described herein may be sufficiently technically inferred by those skilled in the art, and thus description thereof will be omitted.

### [Preparation Example 1]

Fe₃O₄ nanoparticles as a catalyst were subjected to a reduction reaction at 600°C for 3 hours under a mixed gas of hydrogen (5%) and argon (95%), and then allowed to react at 600°C for 24 hours under a mixed gas of argon (80%), CO (15%) and hydrogen (5%), thereby producing platelet carbon nanofibers having a length of 400 nm and a width of 50 nm.

### [Example 1]

The platelet carbon nanofibers having a length of 400 nm and a width of 50 nm, produced in Preparation Example 1, were mixed with Nafion as a first ionomer at a weight ratio of 1:0.3, and the mixture was applied onto a polymer electrolyte membrane (DuPont product; Nafion 212 Membrane) by a bar coating method, and then dried, thereby forming a first layer on the polymer electrolyte membrane. At this time, the first layer was formed such that the platelet carbon nanofibers occupied 50% of the surface area of the polymer electrolyte membrane, and it was confirmed by scanning electron microscopy that the surface of the first layer formed on the polymer electrolyte membrane had an uneven structure. The results are shown in Fig. 3. An electrode catalyst slurry was prepared by mixing 5 g of commercial Pt/carbon catalyst (Tanaka) and 25 g of Nafion (D2020). The electrode catalyst slurry was applied onto the first layer by the same coating method as that for the first layer and dried to form a second layer, thereby manufacturing an electrode.

### [Example 2]

1 g of the platelet carbon nanofibers having a length of 400 nm and a width of 50 nm were impregnated in 1.5 g of Nafion (D2020) solution (ionomer content in Nafion: 20%), dried, and then heat-treated at 120°C, thereby obtaining platelet carbon nanofibers coated with a first ionomer. At this time, the average thickness of the first ionomer coating was set to 4 nm. 2 g of the platelet carbon nanofibers coated with the first ionomer were dispersed in water to a solid content of 20%, and the dispersion was applied onto a polymer electrolyte membrane (DuPont product; Nafion 212 Membrane) by a bar coating method, and then dried to form a first layer. At this time, the first layer was formed such that the platelet carbon nanofibers occupied 50% of the surface area of the polymer electrolyte membrane, and it was confirmed by scanning electron microscopy that the surface of the first layer formed on the polymer electrolyte membrane had an uneven structure (not shown). An electrode catalyst slurry was prepared by mixing 5 g of commercial Pt/carbon catalyst (Tanaka) and 25 g of Nafion (D2020). The electrode catalyst slurry was applied onto the first layer by the same coating method for the first layer and dried to form a second layer, thereby manufacturing an electrode.

### [Example 3]

A membrane-electrode assembly was manufactured in the same manner as in Example 2, except that 2 g of the platelet carbon nanofibers coated with the first ionomer were dispersed in water to a solid content of 5% instead of 20%, and the dispersion was used to form a first layer such that the platelet carbon nanofibers occupied 8% of the surface area of the polymer electrolyte membrane.

### [Example 4]

A membrane-electrode assembly was manufactured in the same manner as in Example 2, except that 2 g of the platelet carbon nanofibers coated with the first ionomer were dispersed in water to a solid content of 30% instead of 20%, and the dispersion was used to form a first layer such that the platelet carbon nanofibers occupied 65% of the surface area of the polymer electrolyte membrane.

### [Example 5]

A membrane-electrode assembly was manufactured in the same manner as in Example 1, except that only 1 g of the platelet carbon nanofibers were used instead of using the platelet carbon nanofibers mixed with the first ionomer Nafion at a weight ratio of 1:0.3.

### [Comparative Example 1]

An electrode catalyst slurry was prepared by mixing 5 g of commercial Pt/carbon catalyst (Tanaka) and 25 g of Nafion, applied by bar coating onto a fluorinated ethylene propylene release film, dried, and then heat-treated, thereby manufacturing an electrode.

The manufactured electrode was cut to a required size, and placed on both surfaces of a polymer electrolyte membrane (DuPont product; Nafion 212 Membrane) so that the electrode surface and the electrolyte membrane were in contact with each other, followed by pressing under heat and pressure. Then, the electrode was transferred by hot-pressing at room temperature for a predetermined time, and the release film was peeled off, thereby manufacturing a membrane-electrode assembly.

### [Comparative Example 2]

A membrane-electrode assembly was manufactured in the same manner as in Example 2, except that 1 g of general layered carbon nanofibers (Sigma Aldrich) was used instead of 1 g of the platelet carbon nanofibers.

### [Comparative Example 3]

A membrane-electrode assembly was manufactured in the same manner as in Example 2, except that 1 g of spherical carbon black (Cabot/Vulcan XC-72) was used instead of 1 g of the platelet carbon nanofibers.

### [Comparative Example 4]

A membrane-electrode assembly was manufactured in the same manner as Example 2, except that the catalyst layer consisting only of the first layer was formed on the polymer electrolyte membrane.

### [Comparative Example 5]

A membrane-electrode assembly was manufactured in the same manner as in Example 2, except that the first layer was formed to a thickness of 2,100 nm.

### [Experimental Example 1]

The physical durability of each membrane-electrode assembly was evaluated based on the durability evaluation protocol of the U.S. Department of Energy (DOE). Specifically, to evaluate the physical durability of the membrane-electrode assembly, H₂ crossover was measured after performing 20,000 wet/dry cycles. The measured values are shown in Table 1 below.

**[Table 1]**

| Wet/dry cycles (20,000 cycles) | H₂ crossover @0.2V (mA/cm²) |
|---|---|
| Example 1 | 3.9 |
| Example 2 | 3.4 |
| Example 3 | 5.5 |
| Example 4 | 3.4 |
| Example 5 | 4.5 |
| Comparative Example 1 | 11.3 |
| Comparative Example 2 | 5.9 |
| Comparative Example 3 | 10.5 |
| Comparative Example 4 | 11.3 |
| Comparative Example 5 | 10.7 |

### [Experimental Example 2]

The output performance of the membrane-electrode assembly manufactured in each of the Examples and the Comparative Examples was evaluated through I (current)-V (voltage) measurement of the membrane-electrode assembly. Specifically, to evaluate the output performance under actual fuel cell operating conditions, a fuel-cell unit cell evaluation device (Scribner 850 fuel cell test system) including the membrane-electrode assembly was used. Under conditions of 65°C, hydrogen (100% RH) and air (100% RH) were supplied to the anode and cathode, respectively, in stoichiometric amounts corresponding to 1.2/2.0. Current density at a voltage of 0.6 V was measured, and higher current density values indicate better output performance.

The results of the experiment are shown in Table 2 below.

**[Table 2]**

| | Cell performance evaluation (A/cm²@0.6V) |
|---|---|
| Example 1 | 1.18 |
| Example 2 | 1.29 |
| Example 3 | 1.22 |
| Example 4 | 1.12 |
| Example 5 | 1.15 |
| Comparative Example 1 | 1.06 |
| Comparative Example 2 | 1.15 |
| Comparative Example 3 | 1.07 |
| Comparative Example 4 | 0.85 |
| Comparative Example 5 | 1.00 |

### [Experimental Example 3]

The thickness of the first layer and the area occupied by the first layer on the entire surface of the polymer electrolyte membrane in the membrane-electrode assembly manufactured in each of the Examples and the Comparative Examples were determined by scanning electron microscopy (SEM). The results are shown in Table 3 below.

**[Table 3]**

| | Thickness (nm) of first catalyst layer | Area ratio (%) occupied by first catalyst layer |
|---|---|---|
| Example 1 | 800 | 50 |
| Example 2 | 800 | 50 |
| Example 3 | 400 | 8 |
| Example 4 | 1,400 | 65 |
| Example 5 | 600 | 35 |
| Comparative Example 1 | - | - |
| Comparative Example 2 | 800 (general carbon nanofibers) | 50 |
| Comparative Example 3 | 500 (spherical carbon black) | 90 |
| Comparative Example 4 | 4,500 | 100 |
| Comparative Example 5 | 2,300 | 85 |

Referring to the Examples and the Comparative Examples, it could be confirmed that, when both the first layer and the second layer according to one embodiment of the present disclosure were included, the fuel cell had excellent durability without degradation of performance. In addition, it could be confirmed that, when the first layer was formed on the polymer electrolyte membrane to a thickness of 30 to 2,000 nm, the fuel cell had excellent durability and cell performance. Furthermore, it could be confirmed that, when the platelet carbon nanofibers occupied 5 to 65% of the total surface area of the polymer electrolyte membrane, the durability and performance of the fuel cell were excellent, and especially when the plate carbon nanofibers occupied 10 to 60% of the total surface area of the polymer electrolyte membrane, the durability and performance of the fuel cell were even better.

Although preferred embodiments of the present disclosure have been described in detail above, these embodiments are presented as specific examples of the present disclosure, and the scope of the present disclosure is not limited thereto. Various modifications and improvements made by those skilled in the art using the basic concepts of the present disclosure as defined in the appended claims also fall within the scope of the present disclosure.

**[Description of Reference Numerals]**

| | | | |
|---|---|---|---|
| 100: | membrane-electrode assembly | | |
| 110: | polymer electrolyte membrane | | |
| 120: | anode electrode or cathode electrode | | |
| 121: | first layer (first catalyst layer) | | |
| 122: | second layer (second catalyst layer) | | |
| 130: | gas diffusion layer | | |
| 200: | fuel cell | | |
| 210: | fuel supply unit | 220: | reforming unit |
| 230: | stack | 231: | first supply tube |
| 232: | second supply tube tube | 233: | first discharge |
| 234: | second discharge tube unit | 240: | oxidant supply |

## Claims

1. A membrane-electrode assembly for a fuel cell, comprising:
a polymer electrolyte membrane;
a first layer formed on a predetermined area of any one surface of the polymer electrolyte membrane; and
a second layer formed to cover an outer surface of the first layer and an area of the one surface of the polymer electrolyte membrane on which the first layer is not formed,
wherein the first layer comprises platelet carbon nanofibers, and
wherein the second layer comprises a catalyst carrier, a catalyst supported on the catalyst carrier, and an ionomer.

2. The membrane-electrode assembly for a fuel cell according to claim 1, wherein a side of the platelet carbon nanofibers in a long axis direction of the nanofibers is in contact with the one surface of the polymer electrolyte membrane.

3. The membrane-electrode assembly for a fuel cell according to claim 1, wherein the platelet carbon nanofibers are randomly arranged on the surface of the polymer electrolyte membrane.

4. The membrane-electrode assembly for a fuel cell according to claim 1, wherein the platelet carbon nanofibers have a width of 5 to 100 nm and a length of 100 to 10,000 nm.

5. The membrane-electrode assembly for a fuel cell according to claim 1, wherein the polymer electrolyte membrane comprises an uneven structure formed on the predetermined area of the one surface of the polymer electrolyte membrane by forming the first layer.

6. The membrane-electrode assembly for a fuel cell according to claim 5, wherein a portion of the second layer covers an outer surface of the uneven structure formed on the polymer electrolyte membrane.

7. The membrane-electrode assembly for a fuel cell according to claim 1, wherein the area of the one surface of the polymer electrolyte membrane which is covered with the second layer and on which the first layer is not formed comprises the catalyst carrier of the second layer, the catalyst supported on the catalyst carrier, and the ionomer.

8. The membrane-electrode assembly for a fuel cell according to claim 1, wherein the platelet carbon nanofibers are electrically conductive carbon nanofibers having no catalyst supported thereon.

9. The membrane-electrode assembly for a fuel cell according to claim 1, wherein the first layer further comprises a first ionomer, wherein the first ionomer is included in a form applied to the platelet carbon nanofibers by mixing or applied to the platelet carbon nanofibers by coating.

10. The membrane-electrode assembly for a fuel cell according to claim 1 or 9, wherein the first ionomer or the ionomer is at least one selected from the group consisting of proton conductors having at least one proton exchange group selected from the group consisting of a sulfonic acid group, a carboxyl group, a boronic acid group, a phosphate group, an imide group, a sulfonimide group, a sulfonamide group, a sulfonic acid fluoride group, and combinations thereof.

11. The membrane-electrode assembly for a fuel cell according to claim 1, wherein the first layer has a thickness of 30 to 2,000 nm, and a thickness of the second layer is the same as or larger than that of the first layer.

12. The membrane-electrode assembly for a fuel cell according to claim 1, wherein the catalyst carrier in the second layer is a spherical or plate-shaped carbon-based carrier.

13. The membrane-electrode assembly for a fuel cell according to claim 12, wherein the catalyst carrier is at least one selected from the group consisting of graphite, graphene, fullerenes, super P, carbon black, ketjen black, denka black, acetylene black, carbon spheres, activated carbon, carbon nanoballs, carbon nanohorns, carbon nanocages, and carbon nanorings.

14. The membrane-electrode assembly for a fuel cell according to claim 1, wherein the first layer occupies an area of 5 to 65% of a total surface of the polymer electrolyte membrane.

15. A method for manufacturing a membrane-electrode assembly for a fuel cell, comprising:
a step of forming a first layer comprising platelet carbon nanofibers on a predetermined area of one surface of a polymer electrolyte membrane; and
a step of forming a second layer to cover an outer surface of the first layer and an area of the one surface of the polymer electrolyte membrane on which the first layer is not formed, by applying a slurry containing a catalyst carrier, a catalyst supported on the catalyst carrier, and an ionomer onto the polymer electrolyte membrane having the first layer formed thereon.

16. The method for manufacturing according to claim 15, wherein the forming of the first layer is performed by applying a composition containing the platelet carbon nanofibers and the first ionomer onto the polymer electrolyte membrane.

17. The method for manufacturing according to claim 16, wherein the composition contains the platelet carbon nanofibers and the first ionomer at a weight ratio of 1.0:0.1 to 1.0:0.5.

18. The method for manufacturing according to claim 15, wherein the forming of the first layer is performed by applying the platelet carbon nanofibers coated with the first ionomer onto the polymer electrolyte membrane.

19. The method for manufacturing according to claim 18, wherein the first ionomer is coated at a weight ratio of 1.0:0.1 to 1.0:0.5 or to a thickness of 2 to 10 nm with respect to the platelet carbon nanofibers.

20. A fuel cell comprising the membrane-electrode assembly according to claim 1.
